(19) Europäisches Patentamt
European Patent Office
Office européen des brevets

(11) **EP 2 148 223 B1**

## (12) EUROPEAN PATENT SPECIFICATION

(45) Date of publication and mention
of the grant of the patent:
**25.01.2012   Bulletin 2012/04**

(51) Int Cl.:
***G01V 3/20*** *(2006.01)*      ***G01V 3/24*** *(2006.01)*

(21) Application number: **08160911.7**

(22) Date of filing: **22.07.2008**

(54) **Apparatus for balancing impedance of a resistivity measuring tool**

Vorrichtung zum Ausgleich der Impedanz eines Widerstandsmesswerkzeugs

Appareil d'équilibrage d'impédance d'un outil de mesure de la résistivité

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**27.01.2010   Bulletin 2010/04**

(73) Proprietors:
• **Schlumberger Holdings Limited
Road Town, Tortola (VG)**
Designated Contracting States:
**GB NL**
• **Schlumberger Technology B.V.
2541 JG  The Hague (NL)**
Designated Contracting States:
**BG CZ DE DK GR HU IE IT LT NO PL RO SI SK TR**
• **PRAD Research and Development N.V.
Road Town, Tortola (VG)**
Designated Contracting States:
**AT BE CH CY EE ES FI HR IS LI LU LV MC MT PT SE**
• **Services Pétroliers Schlumberger
75007 Paris (FR)**
Designated Contracting States:
**FR**

(72) Inventor: **Bloemenkamp, Richard
92340 Le Plessis-Robinson (FR)**

(74) Representative: **Hyden, Martin Douglas et al
Etudes et Productions Schlumberger
Intellectual Property Department
1 rue Henri Becquerel
B.P. 202
92142 Clamart Cedex (FR)**

(56) References cited:
**WO-A-2008/077477      GB-A- 2 401 185
US-A- 3 973 181      US-A- 4 594 552**

## Description

### Technical field

This invention relates to an apparatus for making resistivity measurement of an underground formation in particularly for balancing impedance in borehole resistivity imaging.

### Background art

In the exploration and production of hydrocarbons, it is important to be able to detect the properties of the formation, such as resisitivity surrounding a wellbore. Micro-resistivity tools measure borehole surface resisitivity, these resisitivity measurements may then be used to obtain a borehole wall image.

In borehole micro-resisitivity measuring in non-conductive mud in low-resisitivity formations the tool mandrel, non-conductive borehole fluid and the low-resisitivity formation together form a coaxial waveguide, particularly for frequencies above 100 kHz. The impedance that may be measured between the mandrel and the formation at the position where the measurement system is located is then unstable. This is because any contact or partial contact between the mandrel and the formation, that may occur up to tens of meters away from the measurement system, can have an effect on this impedance. These variations of impedance will normally have an effect on electromagnetic measurements, particularly those above 100kHz if no precautions are made.

WO 2008077477 attempts to provide one solution to this by preventing the waveguide being excited while at the same time preventing reflections from having an effect by separating the waveguide from the measurement system by electrically decoupling the measurement system from the tool mandrel.

It is an object of the invention to provide an apparatus to address the effect that borehole guided waves can have on the measurement system.

### Disclosure of the invention

A first aspect of the invention comprises an apparatus for making resistivity measurements of an underground formation surrounding a borehole, comprising

- a conductive tool body;
- an insulating pad mounted on the tool body;
- at least one current injector electrode and at least one current return electrode mounted on a face of the pad so as to be positionable in use, adjacent the wall of the borehole, the injector and return electrodes being electrically isolated from each other;

wherein the tool body, pad, current injector electrode are arranged such that in use:

a) the ratio of the electric impedance between the current injector electrode and the tool body and the electrical impedance between the current return electrode and the tool body on one hand, and
(b) the ratio of the electrical impedance between the current injector electrode and the formation, and the electrical impedance between the current return electrode and the formation on the other hand,

are substantially equal such that substantially no potential difference between the tool body and the formation is created during the measurement.

The apparatus may be arranged so that the electrical impedance between the injector electrode and pad has a predetermined value and/or the apparatus may be arranged so that the electrical impedance between the return electrode and pad has a predetermined value.

The pad may be mounted on the tool body by mounting means that provide a conductive path between the pad and the tool body. The mounting means may comprise an arm. The pad may comprise a conductive back face electrically connected to the tool body.

In one embodiment the pad may comprise two current return electrodes, having the injector located there between.

The return electrode may be configured to wrap around part of the injector electrode so as to increase the capacitance between the tool body and the return electrode, and decrease the capacitance between the tool body and the injector electrode.

The apparatus can further comprise electrical components connected to the tool body, pad and current injector and return electrodes that modify the electrical behaviour so as to provide the required impedance ratios.

The components may be tunable such that the electrical response of the parts of the apparatus can be adjusted to meet operational requirements. Preferably the tunable components may be dynamically adjusted by an active system.

The injector electrode and/or the return electrode may comprise a spatially distributed array of measurement electrodes. These measurement electrodes may be used for creating measurements which are processed to create a borehole image.

### Brief description of the drawings

Figure 1 shows a schematic diagram of one embodiment of the measurement system;

Figure 2 shows a diagram of the electrical equivalent of Figure 1;
Figure 3 show an alternate diagram for the electrical equivalent of Figure 1; and
Figure 4 shows a schematic diagram of an embodiment of the measurement system.

## Mode(s) for carrying out the invention

During resistivity measurement of a formation surrounding a borehole a waveguide (coaxial transmission line) is formed by the tool mandrel, the non-conductive borehole fluid and the low resistivity formation. When measurement systems are operating above about 100kHz they will inject a wave in the borehole annulus which will lead to a reflected wave. This reflected wave may perturb the measurements that the measurements system is making. For frequencies that are not too high, the waveguide will only allow for propagation of TEM electromagnetic waves and not allow for other modes of propagation.

The impedance between the mandrel and the formation at the position of the measurement system in the absence of the measurement system depends heavily on the characteristic impedance of the transmission line, its length and the termination load of the transmission line.

All three quantities (characteristic impedance, line length and termination load) can change over a large range and therefore impedance may vary a lot as the tool moves. In addition these quantities are not easy to determine, especially the impedance between the tool mandrel and the formation at the touch point. Therefore the measurement system of the invention prevents the excitation of borehole waves by balancing the measurement system so that no potential difference is created between the tool mandrel and formation at the position of the system

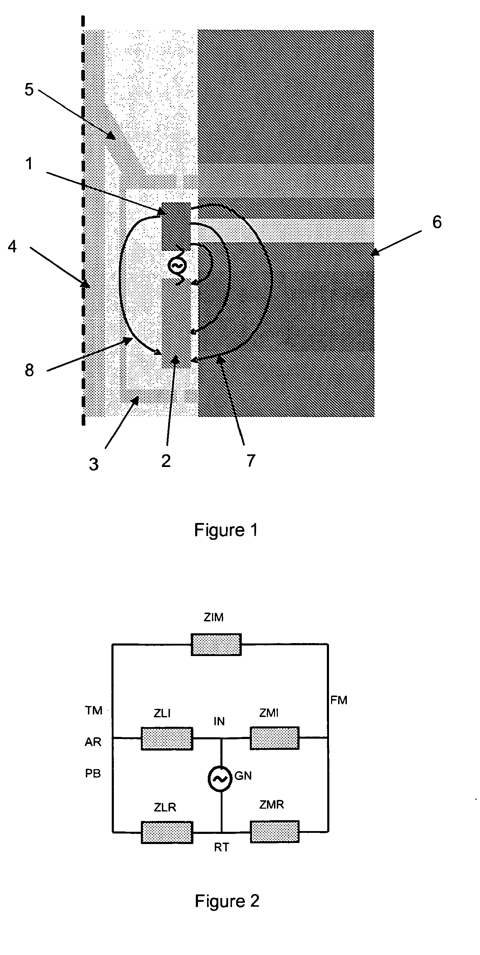

With reference to Figure 1, the measurement system comprises an injector electrode 1, a return electrode 2 and a set of measurement electrodes (not shown) located on a pad 3, attached to a conductive tool body 4 which is centred in the borehole over several meters, e.g. a tool mandrel, a drill pipe. The injectors, returns, and tool body are electrically mutually insulated from each other. An arm 5 connects the pad of the measurement system to the tool mandrel 4 to position the measurement system against the formation 6 where the measurements are to be taken. The arm provides a conductive path between the pad and the tool body.

The measurement system can be part of a tool that is measuring in an existing borehole e.g. wireline or statically installed, or is measuring in a borehole being created i.e. a LWD/MWD tool.

The measurement system can be placed entirely or partly on a pad, a mandrel, a stabilizer blade, a rotary sleeve, a centralizer, a drill pipe or other mechanical systems which will position the measurement system in a borehole. Examples of tools that the measurement system may be part of include (guarded) 2, 3, and 4 terminal measurement tools.

When the measurement system is pushed against the borehole wall, the injector electrode 1 injects a measurement current 7 into the formation 6. The current then returns to the return electrode 2 on the pad 3. In addition to the measurement current 7 there is also a leakage current 8 going from the injector electrode 1 to the return electrode 2 via the metallic body of the pad 3. The metallic body is the part of the pad, which is usually metallic, that has a good electric contact to the arm and the tool mandrel at the frequencies that the measurement system is working at.

As the insulation between each of the elements of the measurement system is not perfect, the impedance between the injector electrode 1 and conductive tool body 4 and the impedance between the return electrode 2 and the tool body 4 can be tuned so that no potential difference is created between the tool body and the formation. With no potential difference between the tool body and formation no borehole waves are generated. The tuning can be fixed or dynamically changing by a regulation system. A regulating system will allow the electrical behaviour of the various impedances between tool body, pad and injector and return electrodes to be altered as different borehole conditions are encountered, to maintain the potential difference between the tool body and formation at zero.

The measurement system is designed so that it does not induce a potential difference between the mandrel and the formation at the position of the measurement system, and as such does not excite EM waves in the borehole. The measurement system is not affected by variations in the characteristic impedance, the length, and the termination load of the transmission line if the measurement system is designed such that no potential difference is created between the tool mandrel and the formation at the position of the system. This is done by arranging the tool body, pad, current injector and current return electrode of the apparatus so that in use (a) the ratio of the electrical impedance between the current injector electrode and the tool body and the electrical impedance between the current return electrode and the tool body is substantially equal to (b) the ratio of the electrical impedance between the current injector electrode and the formation, and the electrical impedance between the current return electrode and the formation. This leads to a measurement system that generates no potential difference between the tool body and the formation and as such it does not inject any electromagnetic waves into the waveguide independent of the characteristics of the waveguide.

The invention is applicable to systems where:

the electrical/ electromagnetic measurement systems have frequencies above 100 kHz or temporal signals with spectral components above 100kHz;
in a borehole filled with mud that at the measurement frequency is significantly more resistive than the formation; and
where the measurement system excites unwanted EM waves in the borehole and is affected by the reflecting borehole waves.

Figure 2 shows an equivalent circuit scheme for the measurement system shown in Figure 1. To balance the measurement system an impedance is chosen such that the impedances ZLI and ZLR are such that there is no or a very small voltage across ZIM, which is the electric complex impedance measured between the tool mandrel, TM, and the formation, FM, at the point of measurement, i.e. no potential difference between the pad back face, PB, and the formation, FM. The current invention balances the impedances by making ZLI and ZLR as big as possible while still respecting the equation:

$$ZLI/ZLR = ZMI/ZMR$$

wherein ZLI is the complex impedance between the injector, IN, and PB;
ZLR is the complex impedance between return, RT, and PB;
ZMI is the complex impedance between the injector, IN, and FM; and
ZMR is the complex impedance between the return, RT, and FM.

If this equation is respected than the voltage across ZIM is zero. Maximising ZLI and ZLR decreases the coupling to the coaxial transmission line in the case where the equation is not perfectly respected.

ZMI is mainly the leaky mud capacitance between IN and FM. This impedance therefore varies with the standoff between IN and FM.

ZMR is mainly the leaky mud capacitance between RT and FM, therefore this impedance varies with the standoff between RT and FM.

The impedances ZLI and ZLR will be determined in the design of the tool, but due to spatial restrictions at least one of them will have a large capacitive component of the order of several tens or hundreds of pico-Farads. By altering the design of the tool it is possible to balance the two capacitances or add electric components.

If the standoff IN to FM and RT to FM vary in the same way then the ratio ZMI/ZMR will not change and one may use a fixed ratio ZLI/ZLR. However if with standoff they do not vary in the same way one may rely on ZLI or ZLR being sufficiently high to prevent the waveguide effect or one may apply some actively regulated balancing technique to obtain the correct ratio.

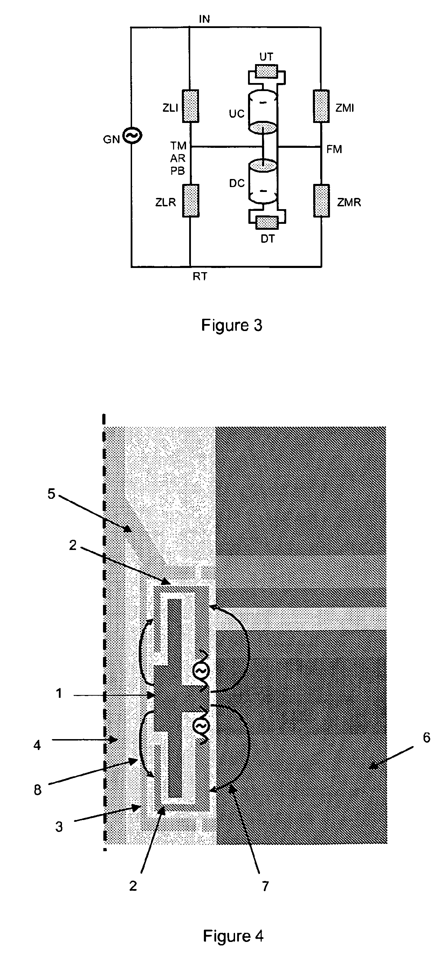

Figure 3 shows an alternative view of the equivalent circuit scheme of Figure 1. Figure 3 shows that by choosing the ratio ZLI/ZLR, it is possible to make the potential difference between TM and FM equal to zero. Figure 3 is equivalent to Figure 2 where the ZIM has been replaced by the two borehole coaxial transmission lines, where UC is the upward coaxial line formed by TM, borehole annulus and FM, DC is downward coaxial line formed by TM, borehole annulus and FM, UT is the upward coaxial line termination, e.g. due to TM touching FM or because it is opened ended, and DT is the downward coaxial line termination, e.g. due to TM touching FM or because it is opened ended. In some cases the downward coaxial line may be negligible e.g. in some configurations where the tool is the last tool in the tool string.

Figure 4 exemplifies one embodiment of the invention. The measurement system comprises a pad 3 with one injector electrode 1 and two return electrodes 2 attached to the tool mandrel 4 via an arm 5. The return electrodes may have an extension folded around the injection section. This increases the capacitance between the pad and the return electrode while at the same time decreasing the capacitance between the pad and the injector electrode. This also allows for more space for electronics in the injector section.

Other systems to obtain balancing of impedance can include the use of active, tunable discrete electrical components such as tunable capacitors, inductors and/or resistors or complete active systems. These electrical components can be connected to the tool body, pad and/or electrode(s) to modify their electrical behaviour so as to provide the required impedance ratios.

**Claims**

1. An apparatus for making resistivity measurements of an underground formation (6) surrounding a borehole, comprising:

   - a conductive tool body (4);
   - an insulating pad (3) mounted on the tool body;
   - at least one current injector electrode (1) and at least one current return electrode (2) mounted on a face of the pad so as to be positionable in use, adjacent the wall of the borehole, the current injector and return electrodes being electrically isolated from each other;

   **characterized in that** the apparatus further comprises a tunable electrical component arranged to modify the ratio of the electrical impedance (ZLI) between the at least one current injector electrode and the tool body and the electrical impedance (ZLR) between the at least one current return electrode and the tool body to a fixed impedance ratio, so that said ratio is substantially equal to the ratio of the electrical impedance (ZMI) between the at least one current injector electrode and the formation, and the electrical impedance (ZMR) between the at least one current return electrode and the formation, generating substantially no potential difference between the tool body and the formation.

2. The apparatus as claimed in claim 1, wherein the electrical impedance (ZLI) between the at least one current injector electrode (1) and the tool body (4) has a predetermined value.

3. The apparatus as claimed in claim 1 or 2, wherein the electrical impedance (ZLR) between the at least one current return electrode (2) and the tool body (4) has a predetermined value.

4. The apparatus as claimed in any preceding claim, wherein the pad (3) is mounted on the tool body (4) by mounting means providing a conductive path between the pad and the tool body.

5. The apparatus as claimed in claim 4, wherein the mounting means comprise at least one arm (5).

6. The apparatus as claimed in claim 4 or 5, wherein the pad comprises a conductive back face electrically connected to the tool body.

7. The apparatus as claimed in any preceding claim, wherein the pad (3) comprises one current injector electrode (1) located between two current return electrodes (2).

8. The apparatus as claimed in any preceding claim, wherein the at least one current return electrode (2) is configured to wrap around part of the at least one current injector electrode (1) so as to increase the capacitance between the tool body and the at least one current return electrode, and decrease the capacitance between the tool body and the at least one current injector electrode.

9. The apparatus as claimed in any preceding claim, wherein the tunable electrical components is connected to the tool body, pad and the at least one current injector electrode and the at least one return electrode.

10. The apparatus as claimed in any preceding claim, wherein the at least one injector electrode (1) and/or the at least one return electrode (2) comprise a spatially distributed array of measurement electrodes.

11. A method for making resistivity measurements of an underground formation surrounding a borehole, the method comprising the steps of:

   - positioning an apparatus as claimed in any preceding claims in a borehole;
   - modifying the ratio of the electrical impedance (ZLI) between the at least one current injector electrode and the tool body and the electrical impedance (ZLR) between the at least one current return electrode and the tool body to a fixed impedance ratio, so that said ratio is substantially equal to the ratio of the electrical impedance (ZMI) between the at least one current injector electrode and the formation, and the electrical impedance (ZMR) between the at least one current return electrode and the formation, generating substantially no potential difference between the tool body and the formation; and
   - measuring the resistivity of the underground formation.

**Patentansprüche**

1. Vorrichtung zum Ausführen von Messungen des spezifischen elektrischen Widerstands einer ein Bohrloch umgebenden unterirdischen Formation (6), die umfasst:

   - einen leitenden Werkzeugkörper (4);
   - ein isolierendes Kissen (3), das an dem Werkzeugkörper montiert ist;
   - wenigstens eine Stromeinleitungselektrode (1) und wenigstens eine Stromrückleitungselektrode (2), die auf einer Fläche des Kissens so montiert sind, dass sie im Gebrauch in der Nähe der Wand des Bohrlochs positioniert werden können, wobei die Stromeinleitungs- und die Stromrückleitungselektrode voneinander elektrisch isoliert sind;

   **dadurch gekennzeichnet, dass** die Vorrichtung ferner eine abstimmbare elektrische Komponente umfasst, die dazu ausgelegt ist, das Verhältnis der elektrischen Impedanz (ZLI) zwischen der wenigstens einen Stromeinleitungselektrode und dem Werkzeugkörper zu der elektrischen Impedanz (ZLR) zwischen der wenigstens einen Stromrückleitungselektrode und dem Werkzeugkörper auf ein festes Impedanzverhältnis zu modifizieren, so dass das Verhältnis im Wesentlichen gleich dem Verhältnis der elektrischen Impedanz (ZMI) zwischen der wenigstens einen Stromeinleitungselektrode und der Formation zu der elektrischen Impedanz (ZMR) zwischen der wenigstens einen Stromrückleitungselektrode und der Formation ist, um zwischen dem Werkzeugkörper und der Formation im Wesentlichen keine Potentialdifferenz zu erzeugen.

2. Vorrichtung nach Anspruch. 1, wobei die elektrische Impedanz (ZLI) zwischen der wenigstens einen Stromeinleitungselektrode (1) und dem Werkzeugkörper (4) einen vorgegebenen Wert hat.

3. Vorrichtung nach Anspruch 1 oder 2, wobei die elektrische Impedanz (ZLR) zwischen der wenigstens einen Stromrückleitungselektrode (2) und dem Werkzeugkörper (4) einen vorgegebenen Wert hat.

4. Vorrichtung nach einem vorhergehenden Anspruch, wobei das Kissen (3) an dem Werkzeugkörper (4) durch Montagemittel montiert ist, die einen leitenden Pfad zwischen dem Kissen und dem Werkzeugkörper schaffen.

5. Vorrichtung nach Anspruch 4, wobei die Montagemittel wenigstens einen Arm (5) umfassen.

6. Vorrichtung nach Anspruch 4 oder 5, wobei das Kissen eine leitende hintere Fläche aufweist, die mit dem Werkzeugkörper elektrisch verbunden ist.

7. Vorrichtung nach einem vorhergehenden Anspruch, wobei das Kissen (3) eine Stromeinleitungselektrode (1) aufweist, die sich zwischen zwei Stromrückleitungselektroden (2) befindet.

8. Vorrichtung nach einem vorhergehenden Anspruch, wobei die wenigstens eine Stromrückleitungselektrode (2) konfiguriert ist, um um einen Teil der wenigstens einen Stromeinleitungselektrode (1) gewickelt zu werden, um so die Kapazität zwischen dem Werkzeugkörper und der wenigstens einen Stromrückleitungselektrode zu erhöhen und die Kapazität zwischen dem Werkzeugkörper und der wenigstens einen Stromeinleitungselektrode zu erniedrigen.

9. Vorrichtung nach einem vorhergehenden Anspruch, wobei die abstimmbaren elektrischen Komponenten mit dem Werkzeugkörper, dem Kissen sowie der wenigstens einen Stromeinleitungselektrode und der wenigstens einen Rückleitungselektrode verbunden sind.

10. Vorrichtung nach einem vorhergehenden Anspruch, wobei die wenigstens eine Einleitungselektrode (1) und/oder die wenigstens eine Rückleitungselektrode (2) eine räumlich verteilte Anordnung vom Messelektroden umfassen.

11. Verfahren zum Ausführen von Messungen des spezifischen elektrischen Widerstands einer ein Bohrloch umgebenden unterirdischen Formation, wobei das Verfahren die folgenden Schritte umfasst:

- Positionieren einer Vorrichtung nach einem der vorhergehenden Ansprüche in einem Bohrloch;
- Modifizieren des Verhältnisses der elektrischen Impedanz (ZLI) zwischen der wenigstens einen Stromeinleitungselektrode und dem Werkzeugkörper zu der elektrischen Impedanz (ZLR) zwischen der wenigstens einen Stromrückleitungselektrode und dem Werkzeugkörper auf ein festes Impedanzverhältnis, so dass das Verhältnis im Wesentlichen gleich dem Verhältnis der elektrischen Impedanz (ZMI) zwischen der wenigstens einen Stromeinleitungselektrode und der Formation zu der elektrischen Impedanz (ZMR) zwischen der wenigstens einen Stromrückleitungselektrode und der Formation ist, um zwischen dem Werkzeugkörper und der Formation im Wesentlichen keine Potentialdifferenz zu erzeugen; und
- Messen des spezifischen elektrischen Widerstands der unterirdischen Formation.

**Revendications**

1. Appareil pour effectuer des mesures de résistivité d'une formation souterraine (6) entourant un trou de forage, comprenant :

- un corps d'outil conducteur (4) ;
- un bloc isolant (3) monté sur le corps d'outil ;
- au moins une électrode d'injection de courant (1) et au moins une électrode de retour de courant (2) montées sur une face du bloc de manière à pouvoir être positionnées en utilisation, adjacentes à la paroi du forage, les électrodes d'injection et de retour de courant étant électriquement isolées les unes des autres ;

**caractérisé en ce que** l'appareil comprend en outre un composant électrique réglable agencé pour modifier le rapport de l'impédance électrique (ZLI) entre l'au moins une électrode d'injection de courant et le corps d'outil et l'impédance électrique (ZLR) entre l'au moins une électrode de retour de courant et le corps d'outil à un rapport d'impédance fixe, de sorte que ledit rapport est sensiblement égal au rapport de l'impédance électrique (ZMI) entre l'au moins une électrode d'injection de courant et la formation, et l'impédance électrique (ZMR) entre l'au moins une électrode de retour de courant et la formation, en ne générant sensiblement pas de différence de potentiel entre le corps d'outil et la formation.

2. Appareil selon la revendication 1, dans lequel l'impédance électrique (ZLI) entre l'au moins une électrode d'injection de courant (1) et le corps d'outil (4) a une valeur prédéterminée.

3. Appareil selon la revendication 1 ou 2, dans lequel l'impédance électrique (ZLR) entre l'au moins une électrode de retour de courant (2) et le corps d'outil (4) a une valeur prédéterminée.

4. Appareil selon l'une quelconque des revendications précédentes, dans lequel le bloc (3) est monté sur le corps d'outil (4) par des moyens de montage produisant un chemin conducteur entre le bloc et le corps d'outil.

5. Appareil selon la revendication 4, dans lequel les moyens de montage comprennent au moins un bras (5).

6.  Appareil selon la revendication 4 ou 5, dans lequel le bloc comprend une face arrière conductrice électriquement connectée au corps d'outil.

7.  Appareil selon l'une quelconque des revendications précédentes, dans lequel le bloc (3) comprend une électrode d'injection de courant (1) située entre deux électrodes de retour de courant (2).

8.  Appareil selon l'une quelconque des revendications précédentes, dans lequel l'au moins une électrode de retour de courant (2) est configurée pour s'enrouler autour d'une partie de l'au moins une électrode d'injection de courant (1) de manière à augmenter la capacité entre le corps d'outil et l'au moins une électrode de retour de courant, et diminuer la capacité entre le corps d'outil et l'au moins une électrode d'injection de courant.

9.  Appareil selon l'une quelconque des revendications précédentes, dans lequel les composants électriques réglables sont raccordés au corps d'outil, au bloc et à l'au moins une électrode d'injection de courant et l'au moins une électrode de retour.

10.  Appareil selon l'une quelconque des revendications précédentes, dans lequel l'au moins une électrode d'injection (1) et/ou l'au moins une électrode de retour (2) comprennent un réseau spatialement distribué d'électrodes de mesure.

11.  Procédé de conduite de mesures de résistivité d'une formation souterraine entourant un forage, le procédé comprenant les étapes consistant à :

    positionner un appareil selon l'une quelconque des revendications précédentes dans un trou de forage ;
    - modifier le rapport de l'impédance électrique (ZLI) entre l'au moins une électrode d'injection de courant et le corps d'outil et l'impédance électrique (ZLR) entre l'au moins une électrode de retour de courant et le corps d'outil à un rapport d'impédance fixe, de sorte que ledit rapport est sensiblement égal au rapport de l'impédance électrique (ZMI) entre l'au moins une électrode d'injection de courant et la formation, et l'impédance électrique (ZMR) entre l'au moins une électrode de retour de courant et la formation, en ne générant sensiblement pas de différence de potentiel entre le corps d'outil et la formation ; et
    - mesurer la résistivité de la formation souterraine.

Figure 1

Figure 2

Figure 3

Figure 4

## REFERENCES CITED IN THE DESCRIPTION

**Patent documents cited in the description**

*   WO 2008077477 A